# EUROPÄISCHE PATENTANMELDUNG

(11) **EP 1 821 247 A1**
(43) Veröffentlichungstag der Anmeldung: **22.08.2007**
(21) Anmeldenummer: 06003194.5
(22) Anmeldetag: 16.02.2006
(51) Int. Cl.: G06Q 10/00

(54) **Verfahren zur Analyse, Steuerung, Automatisierung und zum Informationsmanagement von Lebenszyklusprozessen technischer Produkte**

(71) Anmelder: 7 Layers AG, 40880 Ratingen (DE)
(72) Erfinder: Meckelburg, Hans-Jürgen, Dr., 42329 Wuppertal (DE)
(74) Vertreter: Albrecht, Rainer Harald

(57) **Zusammenfassung**

Die Erfindung betrifft ein Verfahren zur Analyse, Steuerung, Automatisierung und zum Informationsmanagement von Lebenszyklusprozessen technischer Produkte, insbesondere bei komplexen Produkten, wie z. b. im Bereich der Telekommunikation, wobei Informationen von einem Computersystem verarbeitet werden. Das Verfahren umfasst einen Engineeringprozess, einen Analyseprozess, einen Testprozess und greift auf ein Informationssystem zurück. Der Engineeringprozess, der Analyseprozess und der eine Vielzahl von Testmodulen umfassende Testprozess weisen ausschließlich Verbindungen zum Informationsaustausch zum Steuerprozess und zum Informationssystem auf. Für jeden vorgesehenen Test der Testmodule sind der Umfang und die Form der Eingabe- und Ausgabewerte des Tests durch die in dem Informationssystem gespeicherten Informationen eindeutig bestimmt. Die in dem Engineeringprozess eingegebenen und ermittelten Informationen und Vorgabewerte werden von der Prozesssteuerung verarbeitet, die alle Tests ermittelt, die von den Testmodulen durchzuführen sind, wobei die in dem Testprozess von den Testmodulen gewonnenen Ergebnisse an die Prozesssteuerung übergeben werden. In dem Analyseprozess wird mittels einer numerischen oder numerisch-statistischen Berechnung das Erreichen der in dem Engineeringprozess eingegebenen Informationen und Vorgabewerte bestimmt. Wissenschaftliche und technische Formeln, Vorgabewerte aus Industrienormen sowie Expertenwissen werden ausschließlich in der Information des Informationssystemes und Auswahlregeln der Prozesssteuerung umgesetzt. Das Verfahren kommt in allen IP-basierten Netzen (LAN, VPN, Internet, usw.) zum Einsatz.

## Beschreibung

Die Erfindung betrifft ein Verfahren zur Analyse, Steuerung, Automatisierung und zum Informationsmanagement von Lebenszyklusprozessen technischer Produkte, insbesondere bei komplexen Produkten, wie z. B. im Bereich der Telekommunikation. Der Lebenszyklus beginnt typischerweise mit der Planung und Entwicklung eines neuen Produktes, beinhaltet die Begleitung und Verbesserung des am Markt eingeführten Produktes und endet beispielsweise nach Beendigung von Produktion und Vertrieb mit dem Einstellen der technischen Unterstützung der Endkunden.

Die Entwicklung hochtechnologischer Produkte, wie beispielsweise Mobiltelefonen oder anderen elektronischen Geräten, ist aufgrund der Komplexität dieser Produkte langwierig, arbeitsintensiv und erfordert die Berücksichtigung einer Vielzahl von technischen und wirtschaftlichen Gegebenheiten. So müssen beispielsweise wissenschaftliche und technische Formeln, Vorgabewerte aus Industrienormen, sonstiges technisches Expertenwissen genauso berücksichtigt werden wie produktionsbedingte Einschränkungen, Kundenwünsche und gestalterische und ökonomische Vorgaben. Im Rahmen einer solchen Produktentwicklung wird das Erreichen der technischen Vorgaben durch unterschiedlichste Produkttests beispielsweise an Prototypen oder durch Computersimulation überprüft, wobei dann die Ergebnisse dieser Tests im Rahmen der Produktentwicklung in einer iterativen, inkrementalen Vorgehensweise für eine weitere Effizienzsteigerung eingesetzt werden.

Mit der Markteinführung eines technischen Produktes sind auch die Rückmeldungen beispielsweise von Geschäftspartnern, Händler und Endkunden, bei Telekommunikations-Endprodukten insbesondere auch der Netzbetreiber, für eine Verbesserung des Produktes zu berücksichtigen, wobei entsprechend der Nachfrage abgeänderte Produktversionen oder -modelle entwickelt werden können. Oft kann die Wichtigkeit einzelner vorhandener oder nicht vorgesehener Merkmale erst aus dem Reaktionen des Marktes abgeleitet werden.

Während des Lebenszyklus eines Produktes sind auch der technische Support einschließlich Reparatur und Wartung, die Bereitstellung von Zubehör und Ersatzteilen und beispielsweise auch eine Entsorgung oder Verwertung von Altgeräten zu koordinieren.

Bei den aus der Praxis bekannten Verfahren zur Steuerung und Auswertung von Test- und Entwicklungssystemen in der Produktentwicklung eines komplex aufgebauten Produktes sind üblicherweise Teams aus Experten mit der Entwicklung, dem Testen und mit der Analyse der Testergebnisse befasst. Insbesondere auch Art und Umfang der durchzuführenden Tests ist abhängig von den unterschiedlichen Vorgabewerten, den Analyseergebnissen, den Marktgegebenheiten und dem Stand der Entwicklung durch die Experten unter Berücksichtigung des spezifischen Fachwissens festzulegen. Dabei ist abzuwägen, dass die Verlässlichkeit der Testergebnisse durch umfangreiche Tests zunimmt, jedoch dadurch die Kosten und die Entwicklungsdauer ansteigen.

Um bei komplexen Produkten ein zielgerichtetes und systematisches Vorgehen zu ermöglichen, ist bei den bekannten Verfahren ein weitgehend stufenweises Vorgehen erforderlich. Einzelne Teilaspekte der Produktentwicklung werden dabei sequentiell nach einander durch unterschiedliche Expertenteams bearbeitet. Diese Vorgehensweise wird in der Fachwelt auch Wasserfall-Modell bezeichnet. Die genaue Wechselwirkung verschiedener Teilaspekte und Produktmerkmale ist bei einem solchen Vorgehen und einem Einsatz verschiedener Expertenteams teilweise nur mit einem großen Aufwand zu ermitteln.

Der Erfindung liegt die Aufgabe zugrunde, die Effizienz eines Verfahrens zur Analyse, Steuerung, Automatisierung und zum Informationsmanagement von Lebenszyklusprozessen technischer Produkte, insbesondere bei komplexen Produkten, wie z. B. im Bereich der Telekommunikation, zu erhöhen. Insbesondere sollen die Kosten und die Dauer der Produktentwicklung reduziert werden, wobei gleichzeitig die Zuverlässigkeit und die Reproduzierbarkeit des Verfahrens erhöht werden.

Die Aufgabe wird erfindungsgemäß durch ein Verfahren zur Analyse, Steuerung, Automatisierung und zum Informationsmanagement von Lebenszyklusprozessen technischer Produkte gelöst, bei dem Informationen von einem Computersystem, vorzugsweise einem vernetzen Computersystem, verarbeitet werden, wobei das Verfahren einen Engineeringprozess, einen Analyseprozess, einen Testprozess und einen Steuerungsprozess umfasst und auf ein Informationssystem zugreift, wobei der Engineeringprozess, der Analyseprozess und der Testprozess Verbindungen zum Informationsaustausch ausschließlich zu dem Steuerungsprozess und zu dem Informationssystem aufweisen und somit untereinander nicht direkt verbunden sind, wobei der Testprozess eine Vielzahl von Testmodulen umfasst, die jeweils verschiedene Tests durchführen können, wobei die Gesamtheit der möglichen Tests in dem Informationssystem gespeichert ist, wobei für jeden vorgesehenen Test der Testmodule der Umfang des Tests und die Form der Eingabe- und Ausgabewerte des Tests durch die in dem Informationssystem gespeicherten Informationen eindeutig bestimmt ist, wobei die in dem Engineeringprozess eingegebenen und ermittelten Informationen und Vorgabewerte von der Prozesssteuerung verarbeitet werden, die anhand der in dem Informationssystem gespeicherten Informationen alle Tests ermittelt, die von den Testmodulen des Testprozesses durchzuführen sind, wobei die in dem Testprozess von den Testmodulen gewonnenen Ergebnisse im Informationssystem abgelegt und im Analyseprozess verwendet werden, wobei der Analyseprozess ausschließlich auf die von der Prozesssteuerung und dem Informationssystem zur Verfügung gestellten Informationen zurückgreift und mittels einer numerischen oder numerisch-statistischen Berechnung das Erreichen der in dem Engineeringprozess eingegebenen Informationen und Vorgabewerte bestimmt und wobei wissenschaftliche und technische Formeln, Vorgabewerte aus Industrienormen sowie sonstiges Expertenwissen ausschließlich in Informationen des Informationssystemes und Auswahlregeln der Prozesssteuerung umgesetzt werden.

Die einzelnen Prozesse des Verfahrens sind voneinander getrennt, wobei die Informationen durch Assoziationen in Beziehung stehen. Obwohl die Umsetzung der wissenschaftlichen und technischen Formeln, der Vorgabewerte aus Industrienormen sowie des sonstigen Expertenwissens in Informationen des Informationssystems und Auswahlregeln der Prozesssteuerung zunächst mit einem erhöhten Aufwand verbunden ist, wird dadurch das Verfahren reproduzierbar und kann auf einfache Weise für verschiedene Produkte einer Produktklasse angewandt werden. Nach der Implementierung des Verfahrens wird so u. a. durch den hohen Grad der Automatisierung die Dauer der Produktentwicklung verringert. Das erfindungsgemäße Verfahren ist insbesondere auch für die Weiterentwicklung und Qualitätssicherung von Produkten nach deren Markteinführung geeignet, wobei Rückmeldungen bezüglich der Qualität und der Funktion eines Produktes während dessen Betrieb in Informationen des Informationssystemes und Auswahlregeln der Prozesssteuerung umgesetzt werden können, wodurch einerseits eine weitere Optimierung der Produkte und andererseits eine verbesserte Produktentwicklung neuer Produkte ermöglicht wird. Das erfindungsgemäße Verfahren kann in allen Phasen durch die Ergänzung von Auswahlregeln und neu entstandener Informationen und Assoziationen dynamisch angepasst und verbessert werden.

Erfindungsgemäß sind für jeden vorgesehenen Test Umfang und Form durch die in dem Informationssystem gespeicherten Informationen eindeutig bestimmt. Die Auswahl der vorgesehenen Tests entspricht einer Transformation von in dem Informationssystem gespeicherten Informationen. Einzelne Tests lassen sich dabei typischerweise bestimmten Testfällen, die auch Test Cases (TCs) genannt werden, zuordnen wobei ein Testfall eine Gruppe von einzelnen Test umfasst, die sich lediglich durch die Festlegung einzelner Testparameter unterscheiden. Im Rahmen des erfindungsgemäßen Verfahrens können die durchzuführenden einzelnen Test direkt durch eine einzige Transformation aus Informationen des Informationssystem bestimmt werden. Alternativ kann auch vorgesehen sein anhand der Informationen des Informationssystems zunächst die durchzuführenden Testfälle zu bestimmen und anschließend für jeden Testfall die durchzuführenden einzelnen Tests automatisch auszuwählen. Bei der Bestimmung der durchzuführenden Tests können insbesondere auch die Verfügbarkeit, die Auslastung und die Nutzungskosten der verschiedenen Testressourcen berücksichtigt werden. Bei der Nutzung einer Testressource für unterschiedliche Produkte kann beispielsweise auch der zeitliche Ablauf im Rahmen des erfindungsgemäßen Verfahrens in Form eines Testplan automatisch festgelegt werden.

Der Analyseprozess, der ausschließlich auf die von der Prozesssteuerung und dem Informationssystem zur Verfügung gestellten Informationen zurückgreift, verarbeitet Information, die zuvor von dem Testprozess gewonnen wurden. Der Analyseprozess ermöglicht so eine Rücktransformation von den Testergebnissen auf die Produkteigenschaften. Da einzelne Testergebnisse sich üblicherweise nicht eindeutig Informationen und Vorgabewerten zuordnen lassen, die in dem Engineeringprozess eingegeben und ermittelt wurden, ist die Rücktransformation nicht eindeutig und erfolgt typischerweise mittels einer numerisch-statistischen Berechnung. Ausgehend von den in dem Analyseprozess ermittelten Informationen können in dem Engineeringprozess bei der Entwicklung einer neue Version des technischen Produktes oder einer einzelnen Komponente des technischen Produktes Fehler beseitigt und bestimmte Produkteigenschaften gezielt verändert werden. Aufgrund des ganzheitlichen Ansatzes des erfindungsgemäßen Verfahrens kann die Weiterentwicklung verschiedener Produktversionen über den gesamten Lebenszyklus reproduzierbar nachverfolgt werden, wobei auch die Wechselwirkung verschiedener Komponenten des technischen Produktes untersucht werden kann.

In einer bevorzugten Ausführung des erfindungsgemäßen Verfahrens ist das Computersystem aus Computerkomponenten aufgebaut, die über ein Netzwerk verbunden sind. So können die Computerkomponenten durch ein LAN und/oder ein VPN verbunden sein. Auf diese Weise können die Computerkomponenten, beispielsweise über ein Gebäude oder auch mehrere Standorte, verteilt sein. Im Rahmen der Erfindung können einzelne Computerkomponenten oder auch sämtliche Computerkomponenten eines Computersystems durch ein Internet-Protokoll (IP-Verbindung), über das Internet verbunden sein. Auf diese Weise können in einer bevorzugten Ausführung des erfindungsgemäßen Verfahrens externe Testmodule in das Test- und Entwicklungssystem eingebunden werden, wodurch eine maximale Auslastung der vorhandenen Ressourcen erreicht werden kann. Beispielsweise können teure Testressourcen, die auch von unabhängigen Dienstleistungsunternehmen bereitgestellt werden können, in unterschiedliche Test- und Entwicklungssysteme eingebunden und auf diese Weise optimal genutzt werden. Neben der Bereitstellung von externen Testressourcen können auch das Informationssystem oder Teile der Prozesssteuerung und des Analyseprozesses über das Internet aktualisiert, ergänzt oder auch vollständig oder teilweise bereitgestellt werden.

Im Rahmen des erfindungsgemäßen Verfahrens können in einer vorteilhaften Ausgestaltung Web Services in das Computersystem eingebunden werden.

Ein Web Service ist eine Software-Anwendung, auf die über ein Internet-Protokoll, beispielsweise HTTP, durch ein Client-Programm zugegriffen werden kann. Der Datenaustausch erfolgt dabei über definierte Schnittstellen beispielsweise unter Verwendung von XML-basierten Nachrichten. Web Services gewährleisten durch die klare Trennung von Dienstanbieter und Dienstnutzer (Client) ein hohes Maß an Sicherheit, wobei der Einsatz üblicherweise nicht durch das Vorhandensein einer Firewall behindert wird. Durch einen Web Service können ohne Einschränkung sowohl Teile des Informationssystem als auch Testressourcen bereitgestellt werden.

In einer vorteilhaften Ausgestaltung des erfindungsgemäßen Verfahrens ist ein Informationsprozess zur Ausgabe von Informationen an einen Benutzer vorgesehen. Durch diesen Informationsprozess können die Experten und Entscheidungsträger, die mit der Produktentwicklung befasst sind, über den Entwicklungsstand informiert werden. Diese Information kann sowohl automatisch von dem Informationsprozess erstellt oder durch eine Eingabe des Benutzers abgerufen werden.

Für die Durchführung der im Rahmen der Produktentwicklung an einem Produkt durchzuführenden Tests der einzelnen Testmodule ergeben sich im Rahmen der Erfindung unterschiedliche Möglichkeiten. So ist es möglich, dass der Test eines Testmoduls von einem Operator durchgeführt wird, wobei der Umfang des Tests, die Testparameter und die Form der Eingabe der in dem Test ermittelten Ergebnisse durch den Operator von dem Testmodul vorgegeben werden. Vorzugsweise wird zu diesem Zweck eine Ein- und Ausgabemaske einer dem Testmodul zugeordneten Computerkomponente des Computersystems verwendet. In dieser Ein- und Ausgabemaske können beispielsweise die Testparameter genau aufgeführt und Felder für die Eingabe der ermittelten Ergebnisse vorgesehen sein. Durch eine solche Ein- und Ausgabemaske ist auch eine schrittweise angeleitete Durchführung des Tests durch den Operator möglich.

Durch eine genaue Angabe der Testparameter können die Anforderungen an die Fachkenntnisse des Operators und die Gefahr einer Fehlbedienung reduziert werden.

Dadurch, dass die durchzuführenden Tests vollständig von der Prozesssteuerung ermittelt werden, ist auch eine vollständig automatisierte Durchführung der Tests der einzelnen Testmodule durch eine Mess- oder Prüfanordnung, die direkt von dem Testprozess gesteuert wird und die die Ergebnisse direkt an den Testprozess übermittelt, möglich. Die an einem Produkt durchzuführenden Tests der einzelnen Testmodule können auch von einer Mess- oder Prüfanordnung und einem Operator ausgeführt werden, wobei ein Teil der Testparameter an die Mess- oder Prüfanordnung und der andere Teil der Testparameter an den Operator übermittelt werden und wobei die Ergebnisse von der Mess- oder Prüfanordnung und/oder dem Operator an den Testprozess übergeben werden. Die Anweisungen an den Operator können dabei von einfachsten Anweisungen, beispielsweise einer Anweisung zum Einlegen eines Prüfmusters, bis zu komplizierten Anweisungen, die von einem Experten auszuführen sind, reichen. Durch dieses Vorgehen wird ein hohes Maß an Reproduzierbarkeit auch bei Tests erreicht, die nicht vollständig automatisierbar sind.

Zur Verbesserung des Verfahrens kann auch eine Kommentierungssystem vorgesehen sein, mit dem bestimmte Produkteigenschaften kommentiert werden können. Die Nutzung des Kommentierungssystems kann zweckmäßigerweise auch einem erweiterten Personenkreis einschließlich der Geschäfts- und Vertriebspartner ermöglicht werden. Kommentare zu einer Produkteigenschaft werden als Informationen in dem Informationssystem hinterlegt und können beispielsweise bei der Entwicklung einer neuen Produktversion während des Engineeringprozesses bei der Eingabe von Vorgabewerten berücksichtigt werden. Des weiteren kann aus Kommentaren auch Expertenwissen gewonnen werden, welches erfindungsgemäß in Form von Auswahlregeln der Prozesssteuerung und Informationen des Informationssystems in die Analyse, Steuerung von Automatisierung von Lebenszyklusprozessen eingeht.

Zur Verarbeitung der Informationen mit dem Computersystem ist insbesondere eine Software geeignet, die mit einer objektorientierten Programmiersprache, beispielsweise UML (Unified Modeling Language), erstellt ist. Die verwendeten Begriffe orientieren sich an den im Bereich der objektorientierten Programmierung bekannten Bezeichnungen. So können das Informationssystem auch als Referenzdatenbank und die Informationen als Daten bezeichnet werden.

Im Folgenden wird die Erfindung anhand eines lediglich exemplarischen Beispiels erläutert.

### Beispiel:

Für die Produktentwicklung eines neuen Mobiltelefons wird das erfindungsgemäße Verfahren zur Analyse, Steuerung, Automatisierung und zum Informationsmanagement von Lebenszyklusprozessen technischer Produkte eingesetzt. Auf einer ersten Stufe des Engineeringprozesses werden Produkteigenschaften bezüglich des zu entwickelnden Produktes festgelegt. Bei einem Mobiltelefon sind insbesondere die Funknetzstandards, die von dem Telefon unterstützt werden, festzulegen. Neben einer Anzahl von Sendefrequenzen für die Sprachübertragung in einem GSM-Netz können beispielsweise auch die Unterstützung eines UMTS- und eines GPRS-Netzes für die Datenübertragung vorgesehen sein. Für die Kommunikation mit anderen technischen Geräten sind verschiedene Schnittstellenstandards wie beispielsweise ein Anschluss über ein USB-Kabel oder auch schnurlose Verbindungen über WLAN, Bluetooth oder Infrarot möglich. Es können auch verschiedene Multimedia-Zusatzfunktionen wie eine Foto- und/oder Videokamerafunktion oder auch das Abspielen von MP3-Dateien und eines Radioprogrammes für ein Mobiltelefon vorgesehen sein. Neben diesen verschiedenen Optionen werden in der ersten Stufe des Engineeringprozesses auch die Abmessungen und das Design des Mobiltelefons vorgegeben. Die einzelnen Produkteigenschaften stehen zueinander in einem direkten Bezug und bedingen weitere Eigenschaften wie beispielsweise die maximale Stand by- und Betriebsdauer. Die verschiedenen Vorgaben und Optionen werden zu Beginn des Engineeringprozesses in Computerkomponenten eines Computersystems eingegeben, wobei ein Teil der Optionen mit Hilfe von Ein- und Ausgabemaske abgefragt werden anhand derer ein Entwicklungsingenieur die gewünschten Optionen direkt auswählen kann.

Mit den zu Beginn des Engineeringprozesses festgelegten Werten werden von dem Computersystem unter Berücksichtigung der in dem Informationssystem gespeicherten Informationen das Layout eines Prototypen festgelegt und von der Prozesssteuerung die von den Testmodulen des Testprozesses durchzuführenden Tests aus der Gesamtheit der möglichen Tests ausgewählt. Sämtliche wissenschaftliche und technische Formeln, Vorgabewerte aus Industrienormen sowie sonstiges Expertenwissen sind ausschließlich in Informationen des Informationssystems und Auswahlregeln der Prozesssteuerung umgesetzt. Auf diese Weise sind auch der Umfang und der Ablauf der einzelnen Tests reproduzierbar festgelegt. Die einzelnen Tests können vollständig automatisch, beispielsweise im Rahmen einer Simulation, oder auch unter Mitwirkung eines Operators durchgeführt werden. Es kann beispielsweise ein Operator angewiesen werden bestimmte Eingaben an einem Prototypen vorzunehmen während von einer Messapparatur, beispielsweise einem Oszilloskop oder einem Spektrumanalysator, die Verarbeitung der Eingaben durch die Elektronik des Mobiltelefons aufgezeichnet werden.

Bei einer automatischen Durchführung der Tests muss für die Steuerung eines Testobjektes, die im Falle eines Mobiltelefons üblicherweise durch einen Benutzer erfolgt, eine entsprechende Schnittstellen vorgesehen sein. Im Bereich der Telekommunikation hat sich die aus dem Modembereich stammende Verwendung des sogenannten AT-Befehlssatzes zur Steuerung von Endgeräten durchgesetzt. Zusätzlich oder alternativ kann auch ein Agent in Form einer Software in den Speicher der Mobiltelefons installiert und an das Betriebssystem eines Mobiltelefons angebunden werden, wobei der Agent auf die Gerätefunktionen zugreift und zur externen Steuerung eine konfigurierbare Ein- und Ausgabeschnittstelle zur Verfügung stellt. Schließlich sind auch herstellerspezifische Schnittstellen zur Steuerung bekannt. Durch das erfindungsgemäße Verfahren können unterschiedlich ausgeführte Schnittstellen, die auch als Electrical Man Machine Interface (EMMI) bezeichnet werden, an eine gemeinsame, einheitliche, übergeordnete Steuerung angepasst werden.

Insbesondere die Untersuchungen der elektromagnetischen Eigenschaften wie die Feldstärkenverteilung, die Sende- und Empfangsleistungen und die Prüfung der elektromagnetischen Verträglichkeit (EMV-Untersuchung) erfordern einen sehr großen apparativen Aufwand. Im Rahmen des erfindungsgemäßen Verfahrens können Prototypen in Messeinrichtungen externer Prüflabors untersucht werden, wobei die Messeinrichtungen als Testmodul mit einer zugeordneten Computerkomponente über ein Netzwerk an das Test- und Entwicklungssystem angeschlossen werden. Neben der Anbindung über ein VPN sind auch andere IP-Verbindungen zur Anbindung der Computerkomponenten über das Internet möglich. Zusätzlich oder alternativ zu der Anbindung externer Testmodule kann beispielsweise auch eine Aktualisierung des Informationssystems über das Internet vorgesehen sein.

Die in dem Testprozess ermittelten Informationen werden an die Prozesssteuerung übergeben. In einem Analyseprozess, der ausschließlich auf die von Prozesssteuerung und Informationssystem zur Verfügung gestellten Informationen zurückgreift, wird mittels einer numerischen oder numerisch-statistischen Berechnung das Erreichen der in dem Engineeringprozess eingegebenen Informationen und Vorgabewerte bestimmt. Abhängig von dem Erreichen der Vorgabewerte wird im weiteren Verlauf der Produktentwicklung das Layout des Mobiltelefons iterativ in mehreren Entwicklungs-, Test- und Analysezyklen angepasst. Die Eigenschaften verschiedener Produktversionen werden durch das erfindungsgemäße Verfahren genau festgehalten. Insbesondere bei dem Support verschiedener Produktversionen können sich bei der Fehlersuche und -behebung versionsabhängig unterschiedliche Vorgehensweisen ergeben.

Auch nach der Markteinführung des mit Hilfe des erfindungsgemäßen Verfahrens entwickelten Mobiltelefons wird der Lebenszyklus des Mobiltelefons durch das erfindungsgemäße Verfahren begleitet. Zusätzlich zu der zuvor durchgeführten Entwicklung können sich während des Lebenszyklus des Mobiltelefons weitere Verbesserungs- und Optimierungsmöglichkeiten ergeben. Sämtliches zusätzliches Expertenwissen, welches sich beispielsweise aus einer laufenden Produktentwicklung ergibt und welches für ein Produkt bzw. eine Produktgruppe relevant ist, ist in Informationen des Informationssystems und Auswahlregeln der Prozesssteuerung umzusetzen. Durch dieses Vorgehen wird während einer gesamten Produktentwicklung eine höhere Reproduzierbarkeit und eine ökonomische Steuerung und Auswertung der Lebenszyklusprozesse gewährleistet. Des Weiteren wird durch eine Erweiterung und Verfeinerung des Informationssystems und der Auswahlregeln der Prozesssteuerung die Entwicklung neuer Produkte erheblich erleichtert.

Erfahrungsgemäß werden bei einem Nachfolgeprodukt aber auch bei einer weitgehenden Neuentwicklung zu einem großen Teil bereits bekannte und eingehend untersuchte Komponenten, zum Teil leicht abgewandelt, eingesetzt. Die Informationen, die während des Lebenszyklus eines Vorproduktes ermittelt wurden, können so zu einem großen Teil genutzt werden, wodurch Entwicklungszeit und -kosten deutlich gesenkt werden können.

## Patentansprüche

1. Verfahren zur Analyse, Steuerung, Automatisierung und zum Informationsmanagement von Lebenszyklusprozessen technischer Produkte, insbesondere bei komplexen Produkten, wie z. B. im Bereich der Telekommunikation, bei dem Informationen von einem Computersystem verarbeitet werden,
wobei das Verfahren einen Engineeringprozess, einen Analyseprozess, einen Testprozess und einen Steuerungsprozess umfasst und auf ein Informationssystem zugreift,
wobei der Engineeringprozess, der Analyseprozess und der Testprozess Verbindungen zum Informationsaustausch ausschließlich zu dem Steuerungsprozess und zu dem Informationssystem aufweisen und somit untereinander nicht direkt verbunden sind,
wobei der Testprozess eine Vielzahl von Testmodulen umfasst, die jeweils verschiedene Tests durchführen können, wobei die Gesamtheit der möglichen Tests in dem Informationssystem gespeichert ist,
wobei für jeden vorgesehenen Test der Testmodule der Umfang des Testes und die Form der Eingabe- und Ausgabewerte des Testes durch die in dem Informationssystem gespeicherten Informationen eindeutig bestimmt sind,
wobei die in dem Engineeringprozess eingegebenen und ermittelten Informationen und Vorgabewerte von der Prozesssteuerung verarbeitet werden, die anhand der in dem Informationssystem gespeicherten Informationen alle Tests ermittelt, die von den Testmodulen des Testprozesses durchzuführen sind,
wobei die in dem Testprozess von den Testmodulen gewonnenen Ergebnisse im Informationssystem abgelegt und im Analyseprozess verwendet werden,
wobei der Analyseprozess ausschließlich auf die von der Prozesssteuerung und dem Informationssystem zur Verfügung gestellten Informationen zurückgreift und mittels einer numerischen oder numerisch-statistischen Berechnung das Erreichen der in dem Engineeringprozess eingegebenen Informationen und Vorgabewerte bestimmt und
wobei wissenschaftliche und technische Formeln, Vorgabewerte aus Industrienormen sowie sonstiges Expertenwissen ausschließlich in Informationen des Informationssystems und Auswahlregeln der Prozesssteuerung umgesetzt werden.

2. Verfahren nach Anspruch 1, **dadurch gekennzeichnet, dass** das Computersystem aus Computerkomponenten aufgebaut ist, die über ein Netzwerk verbunden sind.

3. Verfahren nach Anspruch 2, **dadurch gekennzeichnet, dass** die Computermodule, zumindest teilweise, durch ein Local Area Network (LAN) und/oder Virtual Private Network (VPN) verbunden sind.

4. Verfahren nach Anspruch 2 oder 3, **dadurch gekennzeichnet, dass** die Computerkomponenten, zumindest teilweise, über das Internet verbunden sind.

5. Verfahren nach Anspruch 4, **dadurch gekennzeichnet, dass** die Anbindung eines externen Testmoduls und/oder die Aktualisierung des Informationssystems sowie Teile der Prozesssteuerung und des Analyseprozesses über das Internet vorgesehen ist.

6. Verfahren nach einem der Ansprüche 1 bis 5, **dadurch gekennzeichnet, dass** ein Informationsprozess zur Ausgabe von Informationen an einen Benutzer vorgesehen ist, wobei die Art, die Darstellung und die Menge der ausgegebenen Informationen durch Informationen der Referenzdatenbank vorgegeben und/oder durch eine Eingabe des Benutzers ausgewählt werden.

7. Verfahren nach einem der Ansprüche 1 bis 6, **dadurch gekennzeichnet, dass** die an einem Produkt durchzuführenden Tests der einzelnen Testmodule, zumindest teilweise, von einem Operator durchgeführt werden, wobei der Umfang des jeweils durchzuführenden Tests, die Testparameter und die Form der Eingabe der in dem Test ermittelten Ergebnisse durch den Operator von dem zugehörigen Testmodul, vorzugsweise in Form einer Ein- und Ausgabemaske einer dem Testmodul zugeordneten Computerkomponente des Computersystems, von dem Testmodul vorgegeben werden.

8. Verfahren nach einem der Ansprüche 1 bis 7, **dadurch gekennzeichnet, dass** die an einem Produkt durchzuführenden Tests der einzelnen Testmodule, zumindest teilweise, von einer Mess- oder Prüfanordnung durchgeführt werden, die direkt von dem Testprozess gesteuert werden und die die ermittelten Ergebnisse direkt an den Testprozess übergeben.

9. Verfahren nach einem der Ansprüche 1 bis 8, **dadurch gekennzeichnet, dass** die an einem Produkt durchzuführenden Tests der einzelnen Testmodule, zumindest teilweise, von einer Mess- und Prüfanordnung und einem Operator ausgeführt werden, wobei ein Teil der Testparameter an die Mess- oder Prüfanordnung und der andere Teil der Testparameter an den Operator übermittelt werden und wobei die Ergebnisse von der Mess- oder Prüfanordnung und/oder dem Operator an den Testprozess übergeben werden.
